# EUROPEAN PATENT SPECIFICATION

(11) **EP 1 948 671 B1**
(45) Date of publication and mention of the grant of the patent: **29.09.2010**
(21) Application number: 06819283.0
(22) Date of filing: 07.11.2006
(51) Int. Cl.: C07F 15/00, B01J 31/22

(54) **PREPARATION OF CATALYSTS**
HERSTELLUNG VON KATALYSATOREN
PREPARATION DE CATALYSEURS

(30) Priority: 09.11.2005 EP 05110501
(43) Date of publication of application: 30.07.2008
(73) Proprietor: Boehringer Ingelheim International GmbH, 55216 Ingelheim am Rhein (DE); Boehringer Ingelheim Pharma GmbH & Co. KG, 55216 Ingelheim am Rhein (DE)
(72) Inventor: GRELA, Karol L., PL-01-471 Warszawa (PL); MICHROWSKA, Anna A., PL-02-776 Warszawa (PL); BIENIEK, Michal, PL-09-407 Plock (PL)
(74) Representative: Hammann, Heinz
(86) International application number: PCT/EP2006/068156
(87) International publication number: WO 2007/054483

(56) References cited:
- MATSUGI, MASATO ET AL: "Synthesis, Reaction, and Recycle of Light Fluorous Grubbs-Hoveyda Catalysts for Alkene Metathesis" JOURNAL OF ORGANIC CHEMISTRY , 70(5), 1636-1642 CODEN: JOCEAH; ISSN: 0022-3263, 2005, XP002421475
- VAN VELDHUIZEN, JOSHUA J. ET AL: "Chiral Ru-Based Complexes for Asymmetric Olefin Metathesis: Enhancement of Catalyst Activity through Steric and Electronic Modification" JOURNAL OF THE AMERICAN CHEMICAL SOCIETY , 125(41), 12502-12508 CODEN: JACSAT; ISSN: 0002-7863, 2003, XP002421476
- GESSLER, SIMON ET AL: "Synthesis and metathesis reactions of a phosphine-free dihydroimidazole carbene ruthenium complex" TETRAHEDRON LETTERS , 41(51), 9973-9976 CODEN: TELEAY; ISSN: 0040-4039, 2000, XP002421477

## Description

The present invention discloses a novel synthesis method for a catalyst of formula **6**, wherein Mes has the meaning of mesityl. 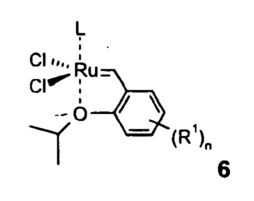 wherein n is an integer from 1 to 3, R¹ is a substituent and L is a neutral ligand;

### BACKGROUND INFORMATION

Great progress has been made in the last few years in the application of olefin metathesis in organic synthesis. Some ruthenium carbene complexes acting as (pre)catalysts have been developed, which possess a high activity in various metathesis reactions as well as a broad tolerance for a number of functional groups. This combination of characteristics is a basis for the usability of such (pre)catalysts in organic synthesis.

Moreover, for the practical application, especially in industrial scale, it is very desirable that these ruthenium complexes are stable for a longer period of time in the conditions of thermal load and that they can be stored, purified and applied without the atmosphere of protective gases.

Ruthenium complexes with the above mentioned characteristics are known in literature. See J. Am. Chem. Soc. 2000, 122, 8168-8179 or Tetrahedron Lett. 2000, 41, 9973-9976. However, it has been discovered that a better stability is connected with a lower catalytic activity. Such a limitation was found for example for the (pre)catalyst of the formula **A** (see Angew. Chemie Int. Ed. 2002, 114, 832).

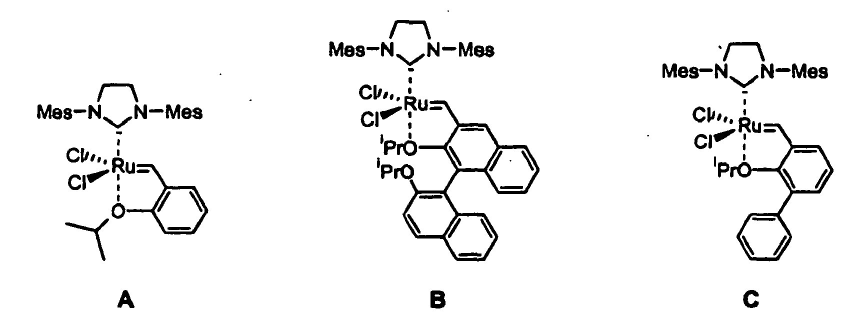

Next, (pre)catalysts of the formula **B** and **C** were described, which demonstrate a higher catalytic activity in comparison with the (pre)catalyst of the formula **A.** The catalysts **A, B** and **C** contain an iso-propoxy group chelating the metal atom. The reason for a higher activity of the systems **B** and **C** is a steric hindrance caused by the presence of a phenyl or a (substituted) naphthyl group in ortho-position to the iso-propoxy group (Angew. Chemie Int. Ed. 2002, 114, 832-834; Angew. Chemie Int. Ed. 2002, 114, 2509-2511). WO 2004-035596 discloses i.e. a ruthenium carbene complex of formula **D** and its practical use as catalysts for different types of metathesis reactions.

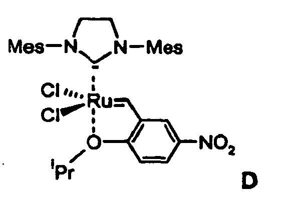

In general one can say the progress in science shows that higher activity for catalytically active systems according to compounds **A-D** is combined with lower stability of the isopropxybenzyliden-ruthenium bond(s).

M. Matsugi et al., Journal of Organic Chemistry 70(5), 1636-1642, 2005 described a process for the preparation of a ruthenium complex with a bidentate styrene isopropyl-ether ligand, wherein the benzene group is substituted by a heptadecafluoroundecyl group via a metal-ligand exchange reaction between pre-catalyst A and 2-vinyl-4-heptadecafluoroundecyl-isopropoxybenzene. Van Veldhuizen, et al., Journal of the American Chemical Society 125(41), 12502-12508, 2003 describes chiral ruthenium based complexes for asymmetric olefin methathesis, which comprise two bidentate ligands: (a) a bidentate styrene isopropyl-ether ligand and (b) a chiral bidentate ligand including hydroxy-substituted bis-naphthyl group linked to one nitrogen of the imidazolidyl carbene moiety. There is no hint to a metal-ligand exchange reaction between pre-catalyst A and substituted 2-(prop-1-en-yl)-isopropoxybenzenes.

The instant invention now provides a method to prepare different catalysts starting from **A** via the replacement of the one-2-isopropoxybenzylidene ligand present in **A** by differently substituted 2-(prop-1-en-1-yl)-isopropoxybenzylidene ligands, possessing different affinity to the ruthenium atom. The method is especially applicable to introduce poorer chelating substituted 2-isopropoxybenzylidene ligand.

### DESCRIPTION OF THE INVENTION

The instant invention relates to a process for manufacturing a compound of formula **6** 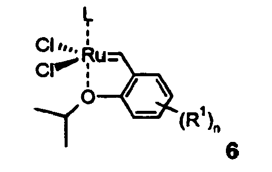 wherein
- L: is a neutral ligand,
- n: is an integer from 1 to 3 and
- R¹: has the meaning of halogen, NO₂, C₁₋₆-alkyl, C₁₋₆-haloalkyl, CO-R^{a}, COOR^{a}, SO₂- R^{a}, PO(R^{a})₂, O-C₁₋₆-alkyl or aryl, while aryl may optionally be substituted by a group selected from among halogen, C₁₋₆-alkyl and O-C₁₋₆-alkyl;
R^{a} denotes C₁₋₈-alkyl, C₁₋₈-haloalkyl, C₃₋₆-cycloalkyl or aryl, optionally substituted by a group selected from among F, Cl, Br, I, C₁₋₆-alkyl, O-C₁₋₆-alkyl, NO₂, CN, CF₃, OCF₃ or O-C₁₋₆-alkylcarbonyl;
via exchange with a ligand of formula **5** 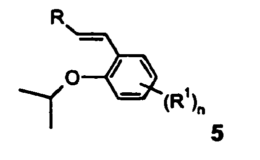 wherein R is CH₃ and R¹ and n has the above given meaning, with compound of formula 3.

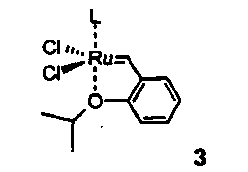

Preferred is the above process wherein
- L is: P(R¹¹)₃;
- R¹¹ is: C₁₋₆-alkyl, C₃₋₈-cycloalkyl or aryl;
- or L: is a ligand of formula **7a, 7b, 7c** or **7d**; 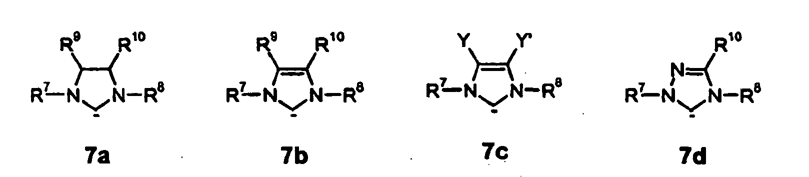
- R⁷ and F⁸: are each independently H, C₁₋₆-alkyl, C₂₋₆-alkenyl or phenyl, wherein the phenyl is optionally substituted with up to three groups independently selected from C₁₋₆-alkyl, O-C₁₋₆-alkyl or halogen;
- R⁹ and R¹⁰: are each independently H, C₁₋₆alkyl, C₂₋₆-alkenyl or phenyl, wherein the phenyl is optionally substituted with up to three groups independently selected from C₁₋₆-alkyl, O-C₁₋₆-alkyl or halogen; or
- R⁹ and R¹⁰: together with the carbon atoms to which they are attached are combined to form a carbocyclic 3 to 8 membered ring;
- Y and Y': are halogen.

Especially preferred is the above process wherein
- R² is: H, -C₁₋₆-alkyl or aryl;
- X and X': are each halogen.

Especially preferred is the above process wherein
- L is: PCy₃ or a ligand of formula **7a, 7b, 7c** or **7d**;
- Cy is: cyclohexyl;
- X and X': are each chlorine.

Especially preferred is the above process wherein
- L is: a ligand of formula **7a, 7b, 7c or 7d**; and
- R⁷ and R⁸: are 2-methylphenyl, 2, 6-dimethylphenyl or 2, 4, 6-trimethylphenyl.

Furthermore preferred is a process for manufacturing a compound of formula **6.1** 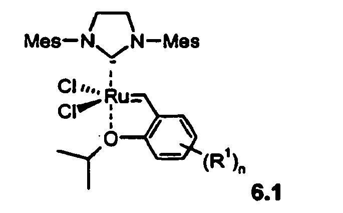 wherein Mes is a mesityl group,
- n: is an integer from 1 to 3 and
- R¹: has the meaning of halogen, NO₂, C₁₋₆-alkyl, C₁₋₆-haloalkyl, CO-R^{a}, COOR^{a}, SO₂- R^{a}, PO(R^{a})₂, O-C₁₋₆-alkyl or aryl, while aryl may optionally be substituted by a group selected from among halogen, C₁₋₆-alkyl and O-C₁₋₆-alkyl;
R⁸ denotes C₁₋₈-alkyl, C₁₋₈-haloalkyl, C₃₋₆-cycloalkyl or aryl, optionally substituted by a group selected from among F, Cl, Br, I, C₁₋₆-alkyl, O-C₁₋₆-alkyl, NO₂, CN, CF₃, OCF₃ or O-C₁₋₆-alkylcarbonyl;
via exchange with a ligand of formula **5** 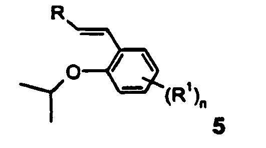 wherein R is CH₃ and R¹ and n has the above given meaning, with compound of formula 3.1.

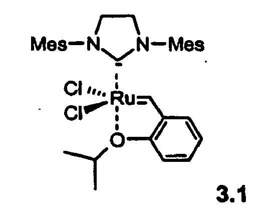

Preferred is the above process wherein
- the temperature during the exchange reaction is below 120°C, preferably below 100°C, most preferably below 80°C.
- the solvent for the reaction is selected from n-hexane and isomers thereof, n-pentane, petroleum ether, cyclohexane, toluene, benzene and mixtures thereof, preferably toluene.
- the ligand of formula **5** is used in over 3-fold excess compared to the catalyst **3** or **3.1**, preferably over 5-fold excess, most preferably over 8-fold excess, in particular between 9 and 11-fold excess.
- the excess of ligand **5** is recycled after the reaction.
- R is CH₃.
- the product is obtained through a sequence of crystallizations from the following solvents: EtOAc, CH₂Cl₂ and methanol.

Especially preferred is the above process wherein the product is obtained through three crystallization steps:
- 1^{st} crystallization from EtOAc,
- 2^{nd} crystallization from CH₂Cl₂,
- 3^{rd} crystallization from methanol.

Preferred is the above process wherein
- n: is 1 and
- R¹: has the meaning of halogen, NO₂, CO-R^{a}, COOR^{a}, SO₂-R^{a}, PO(R^{a})₂ and
R^{a} denotes C₁₋₈-alkyl, C₃₋₆-cycloalkyl or aryl, optionally substituted by a group selected from among F, Cl, Br, I, C₁₋₆-alkyl, O-C₁₋₆-alkyl, NO₂, CN, CF₃, OCF₃ or O-C₁₋₆-alkylcarbonyl.

In particular preferred is the above process wherein
- n: is 1 and
- R¹: has the meaning of NO₂.

Also preferred is the above
- n: is 1 and
- R¹: has the meaning of CO-R^{a}, COOR^{a}, SO₂-R^{a}, PO(R^{a})₂ and
- R^{a}: denotes C₁₋₈-alkyl, C₃₋₆-cycloalkyl or aryl, optionally substituted by a group selected from among F, Cl, C₁₋₆-alkyl, O-C₁₋₆-alkyl or CF₃.

Furthermore preferred is the above process wherein the compound of formula **3.1** is made from a compound of formula 1 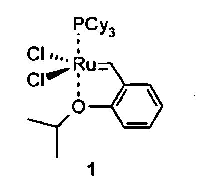 via exchange of the PCy₃ Ligand with 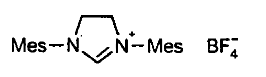 in the presence of a base and a phosphine scavenger in a suitable solvent.

Preferred is the above process wherein
- the base is potassium tert-pentanolate or a homologue thereof (e.g. potassium tert-hexanoate).
- the phosphine scavenger is CuCl.
- the solvent is selected from n-hexane and isomers thereof, n-pentane, petroleum ether, cyclohexane, toluene, benzene and mixtures thereof, preferably n-hexane
- the crude reaction product is purified by crystallisation from methanol.

Also preferred is the use of a reaction product of formula **6** or **6.1** from a process according to claims 1-18 as a catalyst for metathesis reactions.

### DETAILED DESCRIPTION OF THE INVENTION

One possible starting material for this preparation is a Hoveyda-Grubbs 2^{nd} generation catalysts of formula **3** and can be synthesized i.e. in high yield (98-92%) from Hoveyda-Grubbs 1^{nd} generation catalysts of formula **1** (R = Cy, R¹ as defined below) and SIMES carbene precursor **2** under carefully optimized conditions.

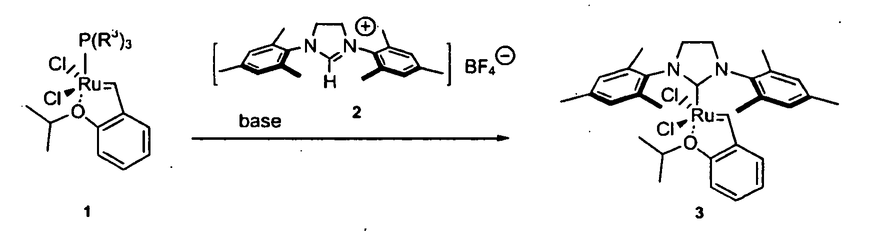

A similar process using 1 (R³ = Ph, R¹ = H) as a starting material has been previously described by Hoveyda et al as being low efficient [Steven B. Garber, Jason S. Kingsbury, Brian L. Gray, and Amir H. Hoveyda J. Am. Chem. Soc. 2000, 122, 8168-8179]. Blechert has reported a more successful two step preparation of **3** from **1** (R = Cy) in 75% yield [Simon Gessler, Stefan Randl and Siegfried Blechert Tetrahedron Letters 2000, 41, 9973-9976]. Treatment of **1** with 1.2 equiv. of SIMES x HCl and 1.2 equiv. KO^{t}Bu in THF /toluene at 80°C leads first to the formation of a intermediate **4** still bearing the PCy₃ moiety.

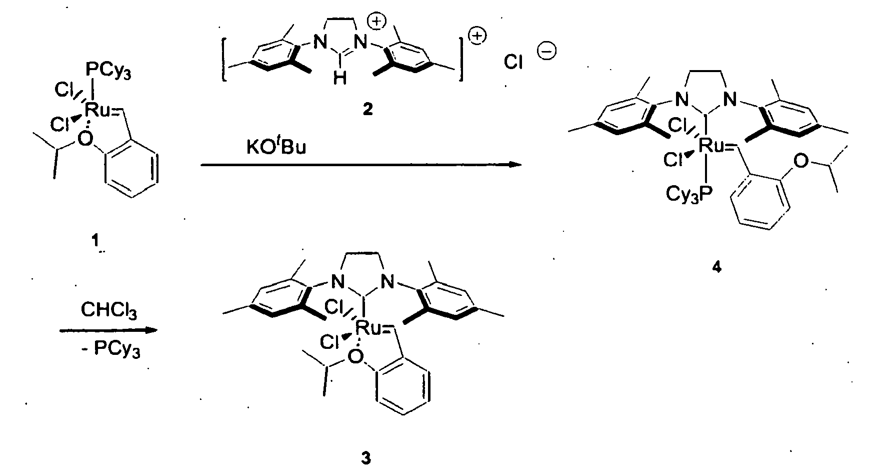

Compound **4** was isolated and was fully characterized by Blechert. Formation of the desired complex was achieved by stirring of **4** at room temperature in CHCl₃ for two hours. The final product **3** was separated from the liberated phosphine and decomposition products by flash chromatography using CH₂Cl₂ as the eluent.

In the present invention a less polar solvent, e.g. n-hexane and isomers thereof, n-pentane, petroleum ether, cyclohexane, toluene, benzene and mixtures thereof and a more soluble base: potassium tert-pentanolate and homologues (e.g. potassium tert-hexanoate) was used. Instead of CHCl₃ solid CuCl was selected as a more effective phosphine scavenger. These modifications in which the reaction is close to heterogeneous conditions allows to develop a high-yielding one-pot process.

In addition, the unexpected observation that the ruthenium-containing, highly coloured reaction by-products are soluble in methanol allows to purify the crude reaction mixture by simple crystallization without need to use tedious chromatographic separation. As a result complex **3.1** can be straightforwardly obtained in a multi gram scale in a high yield (98-92%).

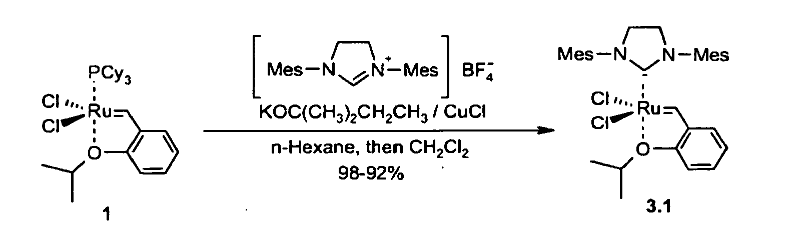

Next step requires the replacement of the good chelating 2-isopropoxybenzylidene fragment in **3.1** with the less chelating 5-nitro-2-isopropoxybenzylidene ligand **5.** The synthesis of **5** is known i. e. from WO 2004-035596.

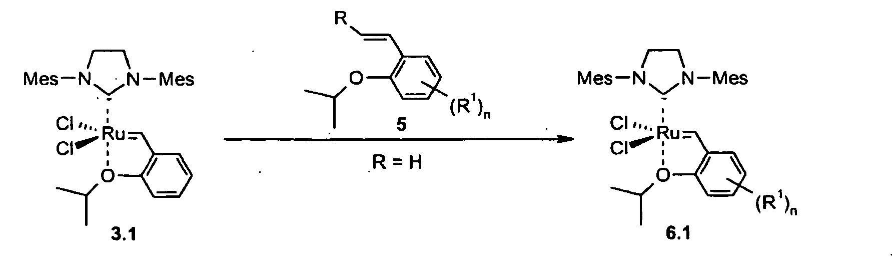

A model experiment showed that the 2-isopropoxybenzylidene ligand bonds to ruthenium ca. 7 times stronger then 5-nitro-2-isopropoxybenzylidene. In order to shift this equilibrium an excess of styrene **5** have to be used. Another problem related to this step is fast homo-dimerisation of styrene 5 to the stilbene **7**.

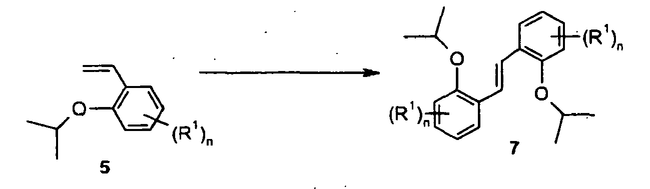

Stilbene **7** cannot react further with catalysts of formula **3** or **3.1** to generate **6** or **6.1,** therefore its formation inhibits the reaction and decreases yield of the final product. Separation of the crystalline stilbene by-product **7** is also difficult from the practical point of view.

After detailed optimization it was found that the corresponding 1-isopropoxy-4-nitro-2-[prop-1-en-1-yl]benzene **5** (R = CH₃) undergoes much slower dimerization, while it still can be used for the exchange reaction. The 10-fold excess of **5** (R = CH₃) gives best results allowing conversion of the 80-90% of the Hoveyda-Grubbs catalyst. The remaining unreacted **3** or **3.1** can be separated and recycled. Use of smaller excess of the ligand **5** is possible, but leads to lower conversions. For example in test exchange reactions with 5 equivalents of **5** the isolated yield of **6.1** was 45-47% instead of ca. 60% obtained typically with 10 equivalents.

Initially it was found that at a temperature about 120 - 80°C the ligand exchange reaction is easier to be controlled and gives reproducible yields of nitro-Hoveyda 2^{nd} generation catalyst **6,** being in a range of 55-70%. The crucial parameter for a successful transformation is the time of the exchange reaction, which has to be in a range 15-25 min. Prolongated heating leads to formation of larger quantities of **7.** Under these conditions the homo-dimerization of **5** is minimized and not exceeds 35% of the starting amount of **5** used. The rest of 1-isopropoxy-4-nitro-2-[prop-1-en-1-yl]benzene **5** can be recovered after the reaction and recycled. Suitable solvents for this reaction are aliphatic and aromatic hydrocarbons (hexane and isomers thereof, n-pentane, petroleum ether, cyclohexane benzene, toluene) and mixtures thereof, preferentially toluene.

The crude reaction mixture after the ligand exchange step, consists of the nitro-Hoveyda catalysts **(6),** small amounts of unreacted Hoveyda-Grubbs 2^{nd} generation catalysts **(3),** large amount of unreacted ligand **(5),** stilbene **(7)** and some minor byproducts and tars. In order to avoid chromatographic techniques in isolation of product **6** from this complicated mixture the product is purified by crystallization from the crude mixture by the following sequence of crystallizations:
- Crystallization from EtOAc to remove the unreacted ligand **5** and catalyst **3**
- Crystallization from CH₂Cl₂ to remove stilbene **7** (repeated if necessary).
- Crystallization from methanol to remove remaining stilbene **7** and unreacted **3.**

These steps can be repeated if necessary until product of a final purity of at least 95% is obtained. Composition of samples after each crystallization step can be conveniently checked by ¹H NMR. Characteristic NMR signals are as follow:
- Stilbene **7,** 2H (CH=CH): 7.49 ppm;
- Nitro-Hoveyda **6,** 1H (CH=Ru): 16.46 ppm;
- Hoveyda-Grubbs **3,** 1H (CH=Ru): 16.56 ppm.

The filtrate after first crystallization from EtOAc contains mainly unreacted ligand 5, smaller amounts of **3, 6,** and some amounts of **7** and undefined products of decomposition (tars).

The undefined products of decomposition (tars) can be easily separated by filtration through a short pad of silica-gel. In a large scale preparation (10 g) i.e. a column of diameter 12 cm and gel was loaded at 9 cm hight. The column was eluted gravitationally with 5% to 20% v/v of ethyl acetate in c-hexane. The first fraction contained pure ligand **5,** then a mixture of **5,** ruthenium complexes **3, 6** and some amount of stilbene **7** was collected. From this fraction additional amounts of nitro-catalyst **6** can be easily obtained by crystallization. Regenerated ligand **5** (combined from the first fraction and filtrates after crystallization of the second fraction) can be successfully used in preparation of next batches of the catalysts, with the same efficiency as the freshly prepared **5**. There is no need to separate the small amounts of Grubbs-Hoveyda catalyst **3** from the ligand **5**, as it is also a starting material for the exchange reaction.

**Summary -** The first step proceeds very smoothly, giving product **3** in high yield with practically no other by-products. The mass balance after second step is more interesting. Starting from 19.6 g of **3** and 69.6 g of the ligand **5** obtained 13.1 g of the product **6** (60% of yield) and 21.0 g (35% of yield) of stilbene **7** are obtained. In addition it is possible to regenerate in total 36.4 g (52% of staring amount) of ligand **5** and 2.6 g (13%) of starting Hoveyda-Grubbs complex **3** (as a mixture with **5**). In a summary, using the above described preparation one is able to obtain in one batch 13.35 g of the Nitro-Hoveyda 2^{nd} generation catalyst **6** (97% acc. to NMR). The total yield of the pure Nitro-Hoveyda 2nd generation catalyst is 55% after two steps.

### USED TERMS AND DEFINITIONS

Terms not specifically defined herein should be given the meanings that would be given to them by one of skill in the art in light of the disclosure and the context. As used in the specification, however, unless specified to the contrary, the following terms have the meaning indicated and the following conventions are adhered to. Unless otherwise specified below, conventional definitions of terms control and conventional stable atom valences are presumed and achieved in all formulas and groups. The term "substituted" as used herein, means that any one or more hydrogens on the designated atom is replaced with a selection from the indicated group, provided that the designated atom's normal valence is not exceeded, and that the substitution results in a stable compound.

The term "C₁₋₆-alkyl" as used herein, either alone or in combination with another substituent, means acyclic, straight or branched chain alkyl substituents containing from one to six carbon atoms and includes, for example, methyl, ethyl, propyl, butyl, hexyl, 1-methylethyl, 1-methylpropyl, 2-methylpropyl or 1,1-dimethylethyl.

The term "C₂₋₆-alkenyl" as used herein, either alone or in combination with another substituent, means acyclic, straight or branched chain alkenyl substituents containing from one to six carbon atoms and at least one double bond. For example ethenyl, propenyl, butenyl, hexenyl, 1-methylethenyl, 1-methylpropenyl, 2-methylpropenyl or 1,1-dimethylethenyl.

The term "C₁₋₆-haloalkyl" as used herein, either alone or in combination with another substituent, means acyclic, straight or branched chain alkyl substituents containing up to six carbon atoms having one or more hydrogens substituted for a halogen selected from bromo, chloro, fluoro or iodo, preferably flouro. Preferably the term C₁₋₆-haloalkyl represents -C₁₋₆-fluoroalkyl such as trifluoromethyl, 2,2,2-trifluoroethyl or perfluoroethyl.

The term "C₃₋₈-cycloalkyl" as used herein, either alone or in combination with another substituent, means a cycloalkyl substituent containing from three to six carbon atoms and includes cyclopropyl, cyclobutyl, cyclopentyl or cyclohexyl.

The term "aryl" as used herein, either alone or in combination with another substituent, means either an aromatic monocyclic system or aromatic multicyclic systems containing carbon atoms. For example, aryl includes a phenyl or a naphthyl ring system, wherein aryl means generally an aromatic system, for example phenyl.

The term "halogen" as used herein means a halogen substituent selected from fluoro, chloro, bromo or iodo.

### EXAMPLE - STEP I

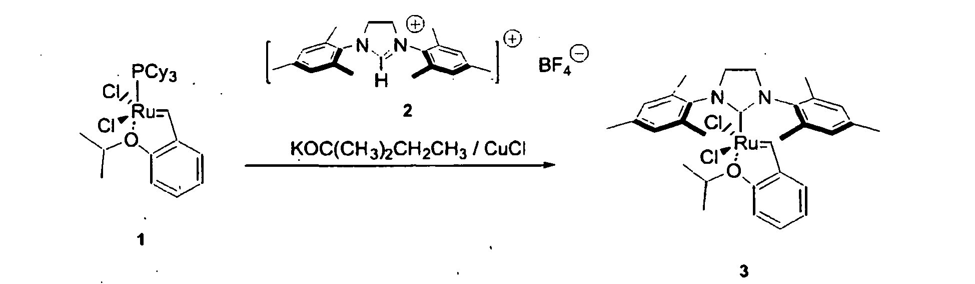

### Materials:

- Hoveyda-Grubbs 1^{st} generation 1 (Boehringer Ingelheim)
- SIMES x HBF₄ **2** (freshly prepared)
- Potassium tert-amylate (1.7 M solution in toluene, Fluka)
- Copper (I) chloride (Aldrich)
- n-Hexane (dried with CaH₂ and distilled under Ar)
- Ethyle Acetate (p.a.)
- c-Hexane (p.a.)
- Methanol(p.a.)
- Dichloromethane (p.a.)
- Celite (Fluka)

### Procedure I

### 1.I. Preparation

A dry, 1000-mL, one-necked, round-bottomed flask is equipped with a magnetic stirring bar, rubber septum and an argon inlet. The flask is charged under an argon atmosphere with a solid SIMES x **HBF₄ 2** (35.28 mmol, 13.9 g) and dry n-hexane (400 mL). A solution of potassium tert-amylate (21.6 mL, 36.75 mmol) is added from a syringe and the resulting mixture is stirred under argon at room temperature for 1 h. To the resulted solution a solid Hoveyda-Grubbs 1^{st} generation catalyst **1** (29.4 mmol, 17.6 g) is added in one portion. The flask is equipped with a reflux condenser with an argon inlet at the top and the reaction mixture is refluxed for 2 h. The contents of the flask are cooled to room temperature and solid CuCl (51.45 mmol, 5.1 g) is added slowly in three portions and the resulting mixture is refluxed for 2 h. From this point forth, all manipulations are carried out in air.

### 1.II. Isolation of the product by crystallization

The reaction mixture is evaporated to dryness and re-dissolved in ethyl acetate (200 mL). The solution is filtrated through a Buchner funnel with glass frit filled with Celite and then concentrated in vacuo. The residue is dissolved in ambient temp. 1:10 v/v mixture of CH₂Cl₂ and methanol (220 mL). After concentration to ca. ¼ of the initial volume using a rotary evaporator (room temperature) crystals are precipitated. These crystals are filtered-off on a Buchner funnel with glass frit. The crystals are washed twice with small portions of CH₃OH (~20 mL), and dried in vacuo to give pure Hoveyda 2^{nd} catalysts **3** (25.3 mmol,15.81 g). The filtrate after crystallization is evaporated to dryness and crystallized for the second time from CH₂Cl₂ and methanol using the same protocol giving an additional crop of pure Hoveyda 2^{nd} generation catalyst (1.7 mmol, 1.08 g). The total yield of pure Hoveyda-Grubbs 2^{nd} generation catalyst **3** is 92% (27.0 mmol, 16.9 g).

### EXAMPLE - STEP II

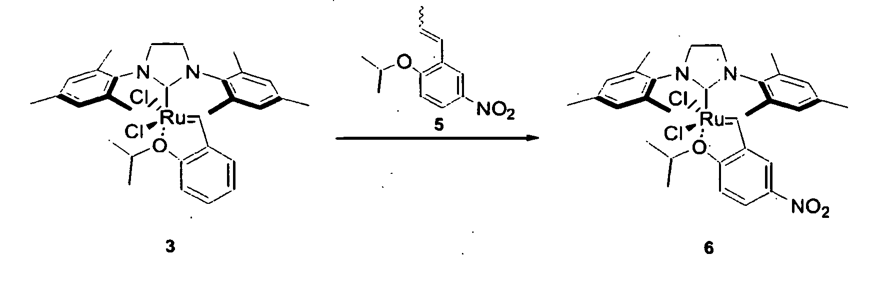

### Materials:

"Ligand" 1-isopropoxy-4-nitro-2-[propl-en-1-yl]benzene **5** (E:Z mixture 1:1)
Hoveyda-Grubbs 2^{nd} catalyst **3** (prepared previously)
Toluene (distilled over Na, stored under Ar)
Ethyl acetate (p.a.)
Methanol (p.a.)
Dichloromethane (p.a.)
c-Hexane (p.a)
Silicagel 60 (230-400 mesh; Merck)

### Procedure II

### 2.I. The ligand exchange

A dry one-necked round-bottomed 1 L flask is equipped with a magnetic stirring bar, rubber septum and argon inlet. The flask is charged under argon with the ligand **5** (1-isopropoxy-4-nitro-2-[prop-1-en-1-yl]benzene) (0.314 mol, 69.57 g) and dry toluene (450 mL). To the solution catalyst **3** (31.28 mmol, 19.60 g) is added in one portion at 80 °C and stirred at 80 °C for 20 min. After this time TLC analysis [Silica gel GF₂₅₄ TLC plates (Merck), eluent: 20% v/v of ethyl acetate in c-hexane] indicates the formation of a new green spot of the product. The ratio of the area of green spots of Hoveyda-Grubbs 2^{nd} **3** and Nitro-catalyst **6** should be -1:3 according to TLC and at this point reaction is stopped. The content of the flask is cooled in ice-bath to room temperature. From this point forth, all manipulations are carried out in air.

### 2.II. Isolation of the product by crystallization

The reaction mixture is evaporated without heating to dryness. The resulting viscous oil is dissolved in cold EtOAc (200 mL). The solution is then cooled in a freezer (-30°C) for 45 min. After this time the cold solution is filtrated through a Buchner funnel with glass frit. The filtrate (FILTRATE I) is kept for regeneration of ligand **5** (see **2.III**). The solid collected on a filter, being a mixture of stilbene and Nitro 2^{nd} generation catalyst, is then dissolved in refluxing CH₂Cl₂ (~200 mL) until a homogeneous solution is formed. Then the obtained solution is cooled in a freezer (-30 °C) for 30 min. After this time a mixture of crystals precipitates. These crystals are filtered-off on a Buchner funnel with glass frit and washed with cold ethyl acetate until only yellow solid (30.69 mmol, 11.86 g, stilbene) left on Buchner funnel. The filtrate is evaporated to dryness and then it is re-dissolved as before in a minimal amount of CH₂Cl₂ until homogeneous solution is obtained. To this solution methanol is added in a volume three times greater then the volume of CH₂Cl₂ used. The solution is concentrated using a rotary evaporator until crystals precipitated (approximately half of the initial volume of solvent must be evaporated). The solution is decanted to the round bottom flask and the crystals are collected on a Buchner funnel with glass frit. The crystals are washed once with small portion of methanol (~30 mL), and next with the minimal small amount of ethyl acetate (~20 mL) and dried in vacuum to give the first crop of pure catalyst **6** (11.98 mmol, 8.05 g). The filtrate and the methanol solution from decantation are combined and evaporated to dryness. The residue is dissolved in refluxed CH₂Cl₂ until homogeneous solution is obtained and the above described crystallizations sequence **(2.II.A** to **2.II.C)** is repeated to give the second crop of pure catalyst **6** (4.04 mmol, 2.72 g). The third crop of Hoveyda catalyst is obtained from the filtrate (FILTRATE I) after crystallization of the crude reaction mixture from ethyl acetate (see bellow).

### 2.III. Regeneration of the ligand for further recycling

The filtrate (FILTRATE I) after crystallization of the crude reaction mixture from ethyl acetate is evaporated to dryness and passed through a short pad of silica gel. Two fractions are obtained: the first fraction (FRACTION I) giving after evaporation a yellow oil (22.15 g) and the second one (FRACTION II) giving a green oil (28.6 g). The second fraction is collected until the colour of eluent changed from green to brown. The second fraction is concentrated to dryness in vacuo and dissolved in CH₂Cl₂. Then methanol (in a volume three times greater than the volume of CH₂Cl₂ used) is added to the resulted homogeneous solution The solution is concentrated using a rotary evaporator until green crystals precipitated (approximately half of the initial volume of solvent is evaporated). These crystals are collected on a Buchner funnel with glass frit and then washed once with a small portion of methanol (-20 mL). Obtained crystals are re-dissolved in refluxed CH₂Cl₂ until homogeneous solution is obtained and the procedure of crystallization **(2.II.C** to **2.II.D)** is repeated to give the third crop of the Nitro-catalyst (3.85 mmol, 2.58 g). Finally three crops of the Nitro-Hoveyda 2^{nd} generation catalyst are combined (19.87 mmol, 13.35 g) and subjected to final precipitation from CH₂Cl₂/ MeOH. The obtained green crystals are dried under vacuum. The total yield of the pure (97% acc. to NMR) Nitro-Hoveyda 2^{nd} generation catalyst is 60% (19.45 mmol, 13.06 g).

The first fraction (FRACTION I) after silica gel filtration and filtrates after crystallization of the second fraction (FRACTION II) can be combined and recycled in next preparations of the catalyst.

## Claims

1. A process for manufacturing a compound of formula **6** 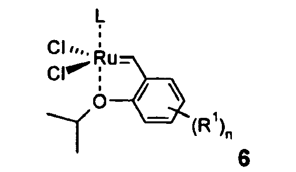 wherein
L is a neutral ligand,
n is an integer from 1 to 3 and
R¹ has the meaning of halogen, NO₂, C₁₋₆-alkyl, C₁₋₆-haloalkyl, CO-R^{a}, COOR^{a}, SO₂-R^{a}, PO(R^{a})₂, O-C₁₋₆-alkyl or aryl, while aryl may optionally be substituted by a group selected from among halogen, C₁₋₆-alkyl and O-C₁₋₆-alkyl;
R^{a} denotes C₁₋₆-alkyl, C₁₋₆-haloalkyl, C₃₋₆-cycloalkyl or aryl, optionally substituted by a group selected from among F, Cl, Br, I, C₁₋₆-alkyl, O-C₁₋₆-alkyl, NO₂, CN, CF₃, OCF₃ or O-C₁₋₆-alkylcarbonyl;
via exchange with a ligand of formula **5** 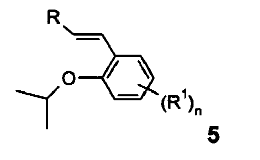 wherein R is CH₃ and R¹ and n has the above given meaning, with compound of formula **3.**

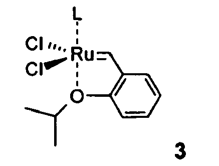

2. A process according to claim 1, wherein
L is P(R¹¹)₃;
R¹¹ is C₁₋₆-alkyl, C₃₋₈-cycloalkyl or aryl;
or L is a ligand of formula **7a, 7b, 7c** or **7d;** 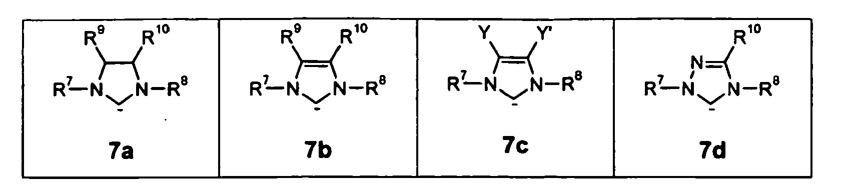
R⁷ and R⁸ are each independently H, C₁₋₆-alkyl, C₂₋₆-alkenyl or phenyl, wherein the phenyl is optionally substituted with up to three groups independently selected from C₁₋₆-alkyl, O-C₁₋₆-alkyl or halogen;
R⁹ and R¹⁰ are each independently H, C₁₋₆-alkyl, C₂₋₆-alkenyl or phenyl, wherein the phenyl is optionally substituted with up to three groups independently selected from C₁₋₆-alkyl, O-C₁₋₆-alkyl or halogen; or
R⁹ and R¹⁰ together with the carbon atoms to which they are attached are combined to form a carbocyclic 3 to 8 membered ring;
Y and Y' are halogen.

3. A process according to claims 1-2 wherein
R² is H, -C₁₋₆-alkyl or aryl;
X and X' are each halogen.

4. A process according to claims 1-3 wherein
L is PCy₃ or a ligand of formula **7a, 7b, 7c** or **7d;**
Cy is cyclohexyl;
X and X' are each chlorine.

5. A process according to claims 1-4 wherein
L is a ligand of formula **7a, 7b, 7c** or **7d;** and
R⁷ and R⁸ are 2-methylphenyl, 2, 6-dimethylphenyl or 2, 4, 6-trimethylphenyl.

6. A process for manufacturing a compound of formula **6.1** 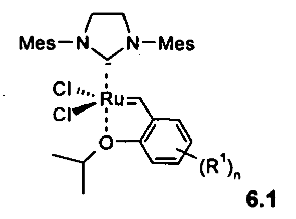 wherein Mes is a mesityl group,
n is an integer from 1 to 3 and
R¹ has the meaning of halogen, NO₂, C₁₋₆-alkyl, C₁₋₆-haloalkyl, CO-R^{a}, COOR^{a}, SO₂-R^{a}, PO(R^{a})₂, O-C₁₋₆-alkyl or aryl, while aryl may optionally be substituted by a group selected from among halogen, C₁₋₆-alkyl and O-C₁₋₆-alkyl;
R^{a} denotes C₁₋₈-alkyl, C₁₋₈-haloalkyl, C₃₋₆-cycloalkyl or aryl, optionally substituted by a group selected from among F, Cl, Br, I, C₁₋₆-alkyl, O-C₁₋₆-alkyl, NO₂, CN, CF₃, OCF₃ or O-C₁₋₆-alkylcarbonyl;
via exchange with a ligand of formula **5** 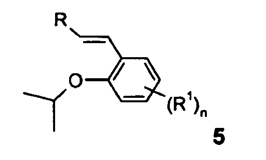 wherein R is CH₃ and R¹ and n has the above given meaning, with compound of formula **3.1.**

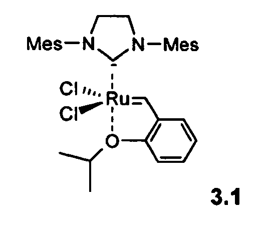

7. A process according to claims 1 to 6, wherein the temperature during the exchange reaction is below 120°C.

8. A process according to claims 1 to 7, wherein the ligand of formula **5** is used in over 3-fold excess compared to the catalyst **3** or **3.1.**

9. A process according to claims 1 to 8, wherein the product is obtained through a sequence of crystallizations from the following solvents: EtOAc, CH₂Cl₂ and methanol.

10. A process according to claims 1 to 9 wherein the excess of ligand **5** is recycled after the reaction.

11. A process according to claims 1 to 10 wherein
n is 1 and
R¹ has the meaning of halogen, NO₂, CO-R^{a}, COOR^{a}, SO₂-R^{a}, PO(R^{a})₂ and
R^{a} denotes C₁₋₈-alkyl, C₃₋₆-cycloalkyl or aryl, optionally substituted by a group selected from among F, Cl, Br, I, C₁₋₆-alkyl, O-C₁₋₈-alkyl, NO₂, CN, CF₃, OCF₃ or O-C₁₋₈-alkylcarbonyl.

12. A process according to claims 1 to 11 wherein
n is 1 and
R¹ has the meaning of NO₂.

13. A process according to claims 1 to 11 wherein
n is 1 and
R¹ has the meaning of CO-R^{a}, COOR^{a}, SO₂-R^{a}, PO(R^{a})₂ and
R^{a} denotes C₁₋₈-alkyl, C₃₋₆-cycloalkyl or aryl, optionally substituted by a group selected from among F, Cl, C₁₋₈-alkyl, O-C₁₋₈-alkyl or CF₃.

14. A process according to one of the claims 6 to 13, wherein the compound of formula **3.1** is made from a compound of formula 1 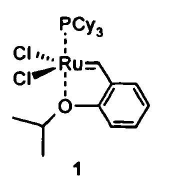 via exchange of the PCy₃ Ligand with 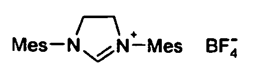 in the presence of a base and a phosphine scavenger in a suitable solvent.

15. A process according to claim 14 wherein the base is potassium tert-pentanolate or potassium tert-hexanoate.

16. A process according to claims 14 or 15 wherein the phosphine scavenger is CuCl.

17. A process according to claims 14 to 16 wherein the solvent is selected from n-hexane and isomers thereof, n-pentane, petroleum ether, cyclohexane, toluene, benzene and mixtures thereof, preferably n-hexane

18. A process according to claims 14 to 17 wherein the crude reaction product is purified by crystallisation from methanol.

## Patentansprüche

1. Verfahren zur Herstellung einer Verbindung der Formel **6** 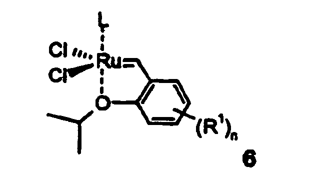 worin
L ein neutraler Ligand ist,
n eine ganze Zahl von 1 bis 3 ist, und
R¹ die Bedeutung von Halogen, NO₂, C₁₋₆-Alkyl, C₁₋₆-Haloalkyl, CO-R^{a}, COOR^{a}, SO₂-R^{a}, PO(R^{a})₂, O-C₁₋₆-Alkyl oder Aryl hat, wobei Aryl gegebenenfalls substituiert sein kann mit einer Gruppe, ausgewählt aus Halogen, C₁₋₆-Alkyl und O-C₁₋₆-Alkyl;
wobei
R^{a} C₁₋₈-Alkyl, C₁₋₈-Haloalkyl, C₃₋₆-Cycloalkyl oder Aryl darstellt, gegebenenfalls substituiert mit einer Gruppe, ausgewählt aus F, Cl, Br, I, C₁₋₆-Alkyl, O-C₁₋₆-Alkyl, NO₂, CN, CF₃, OCF₃ oder O-C₁₋₆- Alkylcarbonyl;
über Austausch mit einem Liganden der Formel **5** 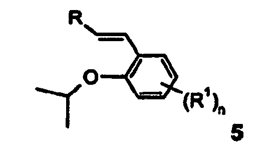 worin R CH₃ darstellt und R¹ und n die oben angegebenen Bedeutungen haben, mit einer Verbindung der Formel **3**

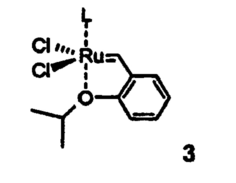

2. Verfahren nach Anspruch 1, worin
L P(R¹¹)₃ darstellt;
R¹¹ C₁₋₆-Alkyl, C₃₋₈-Cycloalkyl oder Aryl darstellt;
oder L einen Liganden der Formel **7a, 7b, 7c** oder **7d** darstellt; 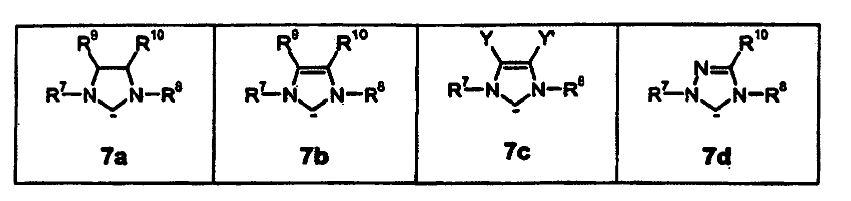
R⁷ und R⁸ sind jeweils unabhängig H, C₁₋₆-Alkyl, C₂₋₆-Alkenyl oder Phenyl, wobei das Phenyl gegebenenfalls substituiert ist mit bis zu drei Gruppen, unabhängig ausgewählt aus C₁₋₆-Alkyl, O-C₁₋₆-Alkyl oder Halogen;
R⁹ und R¹⁰ sind jeweils unabhängig H, C₁₋₆-Alkyl, C₂₋₆-Alkenyl oder Phenyl, wobei das Phenyl gegebenenfalls substituiert ist mit bis zu drei Gruppen, unabhängig ausgewählt aus C₁₋₆-Alkyl, O-C₁₋₆-Alkyl oder Halogen; oder
R⁹ und R¹⁰ sind zusammen mit den Kohlenstoffatomen, an die sie gebunden sind, verbunden, um einen 3-8-gliedrigen carbocyclischen Ring zu bilden;
Y und Y' sind Halogen.

3. Verfahren nach den Ansprüchen 1-2, worin
R² H, C₁₋₆-Alkyl oder Aryl darstellt;
X und X' sind jeweils Halogen.

4. Verfahren nach den Ansprüchen 1-3, worin
L PCy₃ ist oder ein Ligand der Formel **7a, 7b, 7c** oder **7d;**
Cy Cyclohexyl darstellt;
X und X' sind jeweils Chlor.

5. Verfahren nach den Ansprüchen 1-4, worin
L ein Ligand der Formel **7a, 7b, 7c** oder **7d** darstellt; und
R⁷ und R⁸ sind 2-Methylphenyl, 2,6-Dimethylphenyl oder 2,4,6-Trimethylphenyl.

6. Verfahren zur Herstellung einer Verbindung der **Formel 6.1** 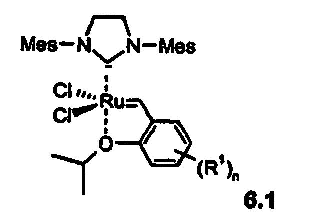 worin Mes eine Mesityl-Gruppe darstellt,
n eine ganze Zahl von 1 bis 3 ist und
R¹ die Bedeutung von Halogen, NO₂, C₁₋₆-Alkyl, C₁₋₆-Haloalkyl, CO-R^{a}, COOR^{a}, SO₂-R^{a}, PO(R^{a})₂, O-C₁₋₆-Alkyl oder Aryl hat, wobei Aryl gegebenenfalls substituiert sein kann mit einer Gruppe, ausgewählt aus Halogen, C₁₋₆-Alkyl und O-C₁₋₆-Alkyl;
wobei
R^{a} C₁₋₈-Alkyl, C₁₋₈-Haloalkyl, C₃₋₈-Cycloalkyl oder Aryl darstellt, gegebenenfalls substituiert mit einer Gruppe, ausgewählt aus F, Cl, Br, I, C₁₋₆-Alkyl, O-C₁₋₆-Alkyl, NO₂, CN, CF₃, OCF₃ oder O-C₁₋₆- Alkylcarbonyl;
über Austausch mit einem Liganden der Formel **5** 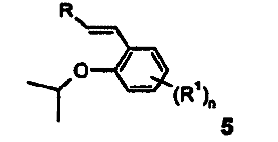 worin R CH₃ darstellt und R¹ und n die oben angegebenen Bedeutungen haben, mit einer Verbindung der Formel **3.1**

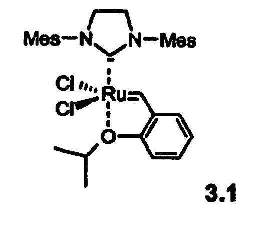

7. Verfahren nach den Ansprüchen 1 bis 6, wobei die Temperatur während der Austauschreaktion unter 120°C liegt.

8. Verfahren nach den Ansprüchen 1 bis 7, wobei der Ligand der Formel **5** mit mehr als dem 3 fachen Überschuss eingesetzt wird, verglichen mit dem Katalysator **3** oder **3.1.**

9. Verfahren nach den Ansprüchen 1 bis 8, wobei das Produkt erhalten wird durch eine Folge von Kristallisationen aus den folgenden Lösungsmitteln: EtOAc, CH₂Cl₂ und Methanol.

10. Verfahren nach den Ansprüchen 1 bis 9, wobei der Überschuss des Liganden **5** nach der Reaktion wiedergewonnen wird.

11. Verfahren nach den Ansprüchen 1 bis 10, wobei
n 1 ist und
R¹ die Bedeutung von Halogen, NO₂, CO-R^{a}, COOR^{a}, SO₂-R^{a}, PO(R^{a})₂ hat, und
wobei
R^{a} C₁₋₈-Alkyl, C₃₋₆-Cycloalkyl oder Aryl bezeichnet, gegebenenfalls substituiert mit einer Gruppe, ausgewählt aus F, Cl, Br, I, C₁₋₆-Alkyl, O- C₁₋₆-Alkyl, NO₂, CN, CF₃, OCF₃ oder O-C₁₋₆-Alkylcarbonyl.

12. Verfahren nach den Ansprüchen 1 bis 11, wobei
n 1 ist und
R¹ die Bedeutung von NO₂ hat.

13. Verfahren nach den Ansprüchen 1 bis 11, wobei
n 1 ist und
R¹ die Bedeutung von CO-R^{a}, COOR^{a}, SO₂-R^{a}, PO(R^{a})₂ hat, und
wobei
R^{a} C₁₋₈-Alkyl, C₃₋₆-Cycloalkyl oder Aryl bezeichnet, gegebenenfalls substituiert mit einer Gruppe, ausgewählt aus F, Cl, C₁₋₆-Alkyl, O-C₁₋₆- Alkyl oder CF₃.

14. Verfahren nach einem der Ansprüche 6 bis 13, wobei die Verbindung der Formel 3.1 aus einer Verbindung der Formel **1** 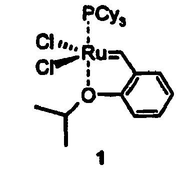 hergestellt wird durch Austausch des PCy₃-Liganden mit 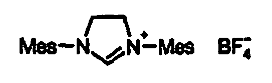 in Gegenwart einer Base und eines Phosphinfängers in einem geeigneten Lösungsmittel.

15. Verfahren nach Anspruch 14, wobei die Base Kalium-tert.-pentanolat oder Kalium-tert.-hexanoat darstellt.

16. Verfahren nach den Ansprüchen 14 oder 15, wobei der Phosphinfänger CuCl darstellt.

17. Verfahren nach den Ansprüchen 14 bis 16, wobei das Lösungsmittel ausgewählt ist aus n-Hexan und Isomeren hiervon, n-Pentan, Petrolether, Cyclohexan, Toluol, Benzol und Mischungen hiervon, bevorzugt n-Hexan.

18. Verfahren nach den Ansprüchen 14 bis 17, wobei das rohe Reaktionsprodukt durch Kristallisation aus Methanol gereinigt wird.

## Revendications

1. Procédé pour produire un composé de formule 6 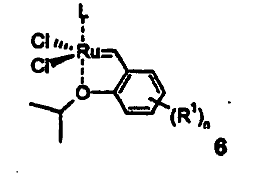 où
L est un ligand neutre,
n est un entier de 1 à 3 et
R¹ a la signification d'halogène, NO₂, C₁₋₆-alkyle, C₁₋₆-haloalkyle, CO-R^{a}, COOR^{a}, SO₂-R^{a}, PO(R^{a})₂, O-C₁₋₆-alkyle ou aryle, tandis qu'aryle peut éventuellement être substitué par un groupe choisi parmi halogène, C₁₋₆- alkyle et O-C₁₋₆-alkyle ;
R^{a} désigne C₁₋₈-alkyle, C₁₋₈-haloalkyle, C₃₋₆-cycloalkyle ou aryle, éventuellement substitué par un groupe choisi parmi F, Cl, Br, I, C₁₋₆- alkyle, O-C₁₋₆-alkyle, NO₂, CN, CF₃, OCF₃ et O-C₁₋₆-alkylcarbonyle
via échange avec un ligand de formule **5** 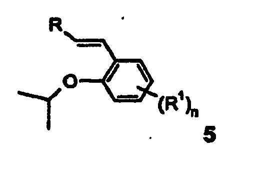 où R est CH₃ et R¹ et n ont la signification donnée ci-dessus, avec un composé de formule **3**.

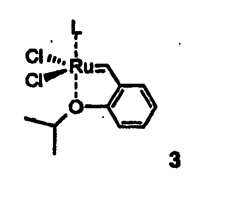

2. Procédé selon la revendication 1 où
L est P(R¹¹)₃ ;
R¹¹ est C₁₋₆-alkyle, C₃₋₈-cycloalkyle ou aryle ;
ou L est un ligand de formule **7a, 7b, 7c** ou **7d** ; 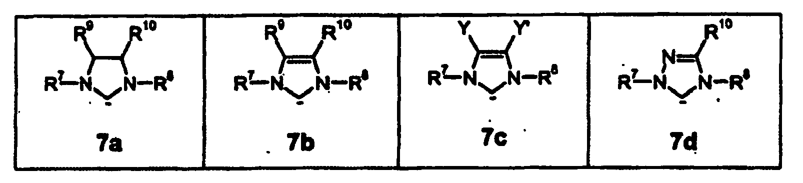
R⁷ et R⁸ sont chacun indépendamment H, C₁₋₆-alkyle, C₂₋₆-alcényle ou phényle, où le phényle est éventuellement substitué avec jusqu'à trois groupes choisis indépendamment parmi C₁₋₆-alkyle, O-C₁₋₆-alkyle et halogène ;
R⁹ et R¹⁰ sont chacun indépendamment H, C₁₋₆-alkyle, C₂₋₆-alcényle ou phényle, où le phényle est éventuellement substitué avec jusqu'à trois groupes choisis indépendamment parmi C₁₋₆-alk-yle, O-C₁₋₆-alkyle et halogène ; ou
R⁹ et R¹⁰ sont combinés avec les atomes de carbone auxquels ils sont liés pour former un cycle carbocyclique à 3 à 8 chaînons ;
Y et Y' sont halogène.

3. Procédé selon les revendications 1-2 où
R² est H, -C₁₋₆-alkyle ou aryle ;
X et X' sont chacun halogène.

4. Procédé selon les revendications 1-3 où
L est PCy₃ ou un ligand de formule **7a, 7b**, **7c** ou **7d** ;
Cy est cyclohexyle ;
X et X' sont chacun le chlore.

5. Procédé selon les revendications 1-4 où
L est un ligand de formule **7a, 7b, 7c** ou **7d** ; et
R⁷ et R⁸ sont 2-méthylphényle, 2,6-diméthylphényle ou 2,4,6-triméthylphényle.

6. Procédé pour produire un composé de formule **6.1** 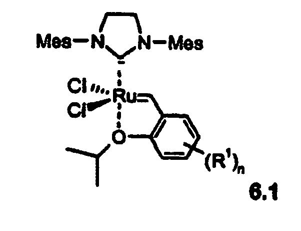 où
Mes est un groupe mésityle,
n est un entier de 1 à 3 et
R¹ a la signification d'halogène, NO₂, C₁₋₆-alkyle, C₁₋₆-haloalkyle, CO-R^{a}, COOR^{a}, SO₂-R^{a}, PO(R^{a})₂, O-C₁₋₆-alkyle ou aryle, tandis qu'aryle peut éventuellement être substitué par un groupe choisi parmi halogène, C₁₋₆- alkyle et O-C₁₋₆-alkyle ;
R^{a} désigne C₁₋₈-alkyle, C₁₋₈-haloalkyle, C₃₋₆-cycloalkyle ou aryle, éventuellement substitué par un groupe choisi parmi F, Cl, Br, I, C₁₋₆- alkyle, O-C₁₋₆-alkyle, NO₂, CN, CF₃, OCF₃ et O-C₁₋₆-alkylcarbonyle ;
via échange avec un ligand de formule **5** 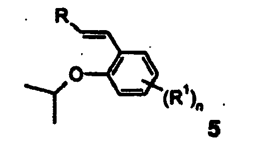 où R est CH₃ et R¹ et n ont la signification donnée ci-dessus, avec un composé de formule **3.1.**

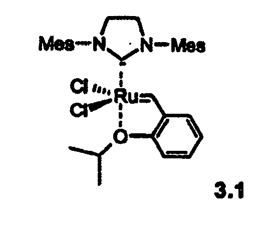

7. Procédé selon les revendications 1 à 6 où la température pendant la réaction d'échange est inférieure à 120°C.

8. Procédé selon les revendications 1 à 7 où le ligand de formule **5** est utilisé en un excès supérieur à 3 fois par rapport au catalyseur **3** ou **3.1.**

9. Procédé selon les revendications 1 à 8 où le produit est obtenu par une succession de cristallisations dans les solvants suivants : EtOAc, CH₂Cl₂ et le méthanol.

10. Procédé selon les revendications 1 à 9 où l'excès de ligand 5 est recyclé après la réaction.

11. Procédé selon les revendications 1 à 10 où
n est 1 et
R¹ a la signification d'halogène, NO₂, CO-R^{a}, COOR^{a}, SO₂-R^{a}, PO(R^{a})₂ et
R^{a} désigne C₁₋₈-alkyle, C₃₋₆-cycloalkyle ou aryle, éventuellement substitué par un groupe choisi parmi F, Cl, Br, I, C₁₋₆-alkyle, O-C₁₋₆- alkyle, NO₂, CN, CF₃, OCF₃ et O-C₁₋₆-alkylcarbonyle.

12. Procédé selon les revendications 1 à 11 où
n est 1 et
R¹ a la signification de NO₂.

13. Procédé selon les revendications 1 à 11 où
n est 1 et
R¹ a la signification de CO-R^{a}, COOR^{a}, SO₂-R^{a}, PO(R^{a})₂ et
R^{a} désigne C₁₋₈-alkyle, C₃₋₆-cycloalkyle ou aryle, éventuellement substitué par un groupe choisi parmi F, Cl, C₁₋₆-alkyle, O-C₁₋₆-alkyle et CF₃.

14. Procédé selon l'une des revendications 6 à 13 où le composé de formule 3.1 est produit à partir d'un composé de formule **1** 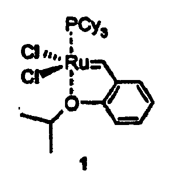 via échange du ligand PCy₃ avec 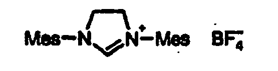 en présence d'une base et d'un piège à phosphines dans un solvant approprié.

15. Procédé selon la revendication 14 où la base est le tert-pentanolate de potassium ou le tert-hexanoate de potassium.

16. Procédé selon les revendications 14 ou 15 où le piège à phosphines est CuCl.

17. Procédé selon les revendications 14 à 16 où le solvant est choisi parmi le n-hexane et ses isomères, le n-pentane, l'éther de pétrole, le cyclohexane, le toluène, le benzène et leurs mélanges, de préférence le n-hexane.

18. Procédé selon les revendications 14 à 17 où le produit réactionnel brut est purifié par cristallisation dans le méthanol.
